# EUROPÄISCHE PATENTSCHRIFT

(11) **EP 1 287 513 B1**
(45) Veröffentlichungstag und Bekanntmachung des Hinweises auf die Patenterteilung: **29.09.2004**
(21) Anmeldenummer: 01940227.0
(22) Anmeldetag: 10.05.2001
(51) Int. Cl.: G08G 1/0968, G01C 21/34

(54) **NAVIGATIONSVERFAHREN**
NAVIGATION METHOD
PROCEDE DE NAVIGATION

(30) Priorität: 18.05.2000 DE 10024475
(43) Veröffentlichungstag der Anmeldung: 05.03.2003
(73) Patentinhaber: SIEMENS AKTIENGESELLSCHAFT, 80333 München (DE)
(72) Erfinder: ZECHLIN, Oliver, 90547 Stein (DE)
(86) Internationale Anmeldenummer: PCT/DE2001/001783
(87) Internationale Veröffentlichungsnummer: WO 2001/088877

(56) Entgegenhaltungen:
- DE-A- 19 521 929
- DE-A- 19 743 371
- DE-A- 19 828 077
- DE-A- 19 848 192
- DE-A- 19 923 750
- PATENT ABSTRACTS OF JAPAN vol. 1998, no. 09, 31. Juli 1998 (1998-07-31) & JP 10 103990 A (MAZDA MOTOR CORP), 24. April 1998 (1998-04-24)

## Beschreibung

Die Erfindung betrifft ein Navigationsverfahren, bei dem ein Fahrzeug unter Nutzung eines Navigationssystems mit einer fahrzeuggebundenen Navigationseinrichtung zu einem von einem Zielort beabstandeten Fahrzeugabstellort bewegt wird. Sie betrifft weiterhin eine Navigationseinrichtung und ein Navigationshilfegerät zur Durchführung des Verfahrens.

Derzeit übliche Kfz-Navigationssysteme weisen in der Regel eine im Fahrzeug eingebaute, d. h. fahrzeuggebundene Navigationseinrichtung auf, welche dem Fahrer des Fahrzeugs anzeigt, auf welchem Weg er am schnellsten von einem Startort zu einem Zielort gelangt. Unter Navigationssystem wird dabei nicht nur die Navigationseinrichtung an sich, sondern das gesamte zur Navigation erforderliche System mit den weiteren Einrichtungen, beispielsweise einem Satellitennetz oder einem Mobilfunknetz, verstanden. Mit Hilfe eines solchen Netzes werden entweder von der Navigationseinrichtung selber die aktuellen Positionsdaten des Fahrzeugs ermittelt oder es wird innerhalb des Navigationssystems, beispielsweise bei einer Einbuchung in ein Mobilfunknetz unter Nutzung der Informationen von verschiedenen Basisstationen, die jeweilige Position des Fahrzeugs ermittelt und die so ermittelten Positionsdaten werden dann an die Navigationseinrichtung übermittelt. Weitere Bestandteile eines solchen Navigationssystems können verschiedene Sensoren sein, mit denen die Geschwindigkeit, die Beschleunigung, die Fahrtrichtung usw. des Fahrzeug gemessen werden und anhand deren Daten die Ortung und somit die Navigation verbessert wird.

In der Offenlegungsschrift DE 198 48 192 (VOLKSWAGENWERK AG) wird ein kraftfahrzeuggebundenes Navigationssystem offenbart, welches aus einem an ein Kraftfahrzeug gebundenen Navigationsrechner und einem portablen Gerät besteht, wobei das portable Gerät im Wesentlichen aus einem GPS-Empfänger, einer GSM-Schnittstelle und einer Anzeigeeinheit aufgebaut ist. Über die GSM-Schnittstelle steht das portable Gerät mit dem kraftfahrzeuggebundenen Navigationsrechner in ständiger Verbindung, und ermöglicht so eine Verwendung des fahrzeuggebundenen Navigationsrechners auch außerhalb des Fahrzeugs. Der Nachteil des vorgeschlagenen Verfahrens ist, dass der Navigationsrechner im Fahrzeug immer betrieben werden muss und damit laufend Batterie des Fahrzeugs verbraucht wird um jederzeit einen eventuellen Zugriff des portablen Geräts zu ermöglichen.

Die Offenlegungsschrift DE 199 23 750 (BRUST HANS DETLEF) befasst sich mit dem Wiederfinden eines abgestellten Fahrzeugs, nachdem sich der Fahrzeugbenutzer von diesem entfernt hat. Das vorgestellte mobile Terminal umfasst im Wesentlichen eine Datensammeleinheit für die Position des abgestellten Fahrzeugs. Nach dem Entfernen vom Fahrzeug kann das Terminal die Position des Fahrzeugs dann anzeigen.

Ein Nachteil der aus dem Stand der Technik bekannten Navigationssystem mit einer fahrzeuggebundenen Navigationseinrichtung und einer portablen Einheit tritt dann zutage, wenn das Fahrzeug - wie eingangs beschrieben - zu einem von einem Zielort beabstandeten Fahrzeugabstellort bewegt wird. Dies ist u.a. zwangsläufig dann der Fall, wenn der tatsächliche Zielort aus verkehrstechnischen oder parktechnischen Gründen nicht direkt mit dem Fahrzeug angefahren werden kann, beispielsweise weil sich der Zielort in einer weitläufigen Fußgängerzone befindet. Der Nutzer muss dann sein Fahrzeug an einem Parkplatz abstellen und vom Parkplatz zum Zielort zu Fuß oder mit einem alternativen Transportmittel gelangen. Für diese letzte Strecke zwischen Fahrzeugabstellort und Zielort ist keine Hilfe durch die portable Einheit möglich.

Es stellt sich daher die Aufgabe, eine Alternative zu diesem bekannten Stand der Technik zu schaffen.

Diese Aufgabe wird dadurch gelöst, dass zumindest Positionsdaten des Fahrzeugabstellorts und des Zielorts vom Navigationssystem an ein fahrzeugunabhängiges, portables Navigationshilfegerät übermittelt werden, welches mittels einer Ausgabeeinrichtung an einen Benutzer Informationen über den Weg zwischen dem Fahrzeugabstellort und dem Zielort ausgibt. Die Suche nach dem optimalen Weg zwischen Fahrzeugabstellort und Zielort wird vom Navigationshilfegerät anhand der übermittelten Daten durchgeführt.

Bei den Positionsdaten des Fahrzeugabstellorts und des Zielorts kann es sich entweder um Adressen oder auch Koordinaten in einem normierten, d. h. vom Navigationssystem und vom Navigationshilfegerät verwendeten, Koordinatensystem handeln.

Bei einer besonders bevorzugten Ausführungsform werden vom Navigationssystem an das Navigationshilfegerät nicht nur die Positionsdaten übergeben, sondern auch Umgebungsinformationen für einen ganzen Umgebungsbereich um den Fahrzeugabstellort, dem Zielort und einem dazwischenliegenden Weg. Das heißt, es wird eine gesamte Karte bzw. ein Kartenausschnitt für den Bereich zwischen Fahrzeugabstellort und Zielort übermittelt.

Bei einer alternativen Ausführungsform sind bereits im Navigationshilfegerät Umgebungsinformationen für Umgebungen verschiedener Orte in einem Speicher hinterlegt. Anhand der vom Navigationssystem erhaltenen Positionsdaten des Fahrzeugabstellorts und des Zielorts wählt dann das Navigationshilfegerät einen entsprechenden Umgebungsbereich um den Fahrzeugabstellort und den Zielort bzw. einen dazwischenliegenden Weg aus. Das heißt, das Navigationshilfegerät wählt selbsttätig einen geeigneten Kartenausschnitt aus, sodass sowohl der Fahrzeugabstellort als auch der Zielort und ein dazwischenliegender Weg entsprechend überdeckt sind.

Die Übermittlung der Daten vom Navigationssystem an das Navigationshilfegerät erfolgt vorzugsweise direkt von der fahrzeuggebundenen Navigationseinrichtung über eine geeignete Schnittstelle. Dabei wird vorzugsweise eine drahtlose Schnittstelle, z. B. eine Infrarot-, Ultraschall- oder eine Funkschnittstelle, verwendet. Eine Nutzung vorhandener Standards wie zum Beispiel IrDa (Infrarot), DECT oder Bluetooth ist vorteilhaft. Ebenso sollten beim Austausch der Daten systemübergreifende Datenformate gewählt werden, um eine möglichst große Kompatibilität zu erreichen.

Bei einer weiteren Alternative werden die Positionsdaten mittels eines Datenträgers, beispielsweise mit einem CompactFlash- oder MultiMediaCard-Datenträger oder einer SIM-Card o.ä. , übertragen. Das heißt, die Positionsdaten und/oder die Umgebungsinformationen und/oder die Wegdaten werden von der fahrzeuggebundenen Navigationseinrichtung auf einen Datenträger geschrieben und dann nach Entnahme des Datenträgers aus der Navigationseinrichtung und Einlegen in das Navigationshilfegerät vom Navigationshilfegerät gelesen.

Bei einer besonderen Ausgestaltung dieser Alternative werden die Positionsdaten von der Navigationseinrichtung auf einen Datenträger geschrieben, auf dem bereits Umgebungsinformationen innerhalb eines bestimmten Bereichs um den jeweiligen Fahrzeugabstellort gespeichert sind. Es kann sich hierbei beispielsweise um einen Datenträger handeln, welcher beispielsweise eine bestimmte Karte eines bestimmten Bereichs enthält. Die Positionsdaten und die benötigten Umgebungsinformationen werden dann von dem Navigationshilfegerät vom Datenträger gelesen.

In diesem Fall könnte zum Navigationshilfegerät beispielsweise ein ganzer Satz von Datenträgern mit verschiedenen Karten gehören. Je nach Fahrzeugabstellort wird dann vom Navigationssystem das Einlegen eines Datenträgers mit einer bestimmten Karte angefordert und auf dieser Karte auf dem Datenträger die Standorte und ggf. der optimale Weg gespeichert. Das Navigationshilfegerät nutzt dann die Daten von der gespeicherten Karte und die von der Navigationseinrichtung eingespeicherten Positionen und Weginformationen, um die gewünschten Informationen auf dem Weg an den Nutzer auszugeben.

Bei einer weiteren alternativen Ausführungsform werden die Positionsdaten nicht von der Navigationseinrichtung selbst, sondern von einer Datenübermittlungseinrichtung des Navigationssystems, beispielsweise über einen Gateway-Server, an das Navigationshilfegerät übermittelt. Eine solche Übermittlung kann beispielsweise über langreichweitige Funkstrecken, vorzugsweise in einem Mobilfunkstandard, erfolgen. Es bietet sich dabei an, die Information in Form einer SMS- oder ähnlichen Sprachnachricht zu übermitteln, da solche SMS-Nachrichten relativ kostengünstig sind.

Eine geeignete Navigationseinrichtung für ein Fahrzeug zur Durchführung des erfindungsgemäßen Verfahrens weist Mittel zur Ermittlung der Positionsdaten eines gewählten Fahrzeugabstellorts und eines gewählten Zielorts und/oder zugehöriger Umgebungsinformationen dieser Orte bzw. eines Weges zwischen diesen Orten auf. Darüber hinaus besitzt diese Navigationseinrichtung eine Schnittstelle zur Übermittlung der Positionsdaten bzw. der Umgebungsinformationen und/oder des Weges an ein Navigationshilfegerät und alternativ oder zusätzlich eine Datenträgerschreibeinrichtung zur Speicherung der genannten Daten auf einem Datenträger.

Ein erfindungsgemäßes Navigationshilfegerät zur Durchführung des Verfahrens besitzt dementsprechend eine passende Schnittstelle und alternativ oder zusätzlich eine Datenträgerleseeinrichtung. Darüber hinaus benötigt das Navigationshilfegerät eine Ausgabeeinheit sowie Mittel zum Empfang von Daten betreffend einen Fahrzeugabstellort und einen Zielort von einem Navigationssystem mittels der Schnittstelle bzw. zum Erfassen solcher Daten von einem Datenträger, und weiterhin Mittel zur Ausgabe von Informationen über einen Weg zwischen dem Fahrzeugabstellort und dem Zielort mittels der Ausgabeeinheit an einen Benutzer.

Bei der Ausgabeeinheit handelt es sich vorzugsweise um eine Anzeigeeinrichtung, beispielsweise ein Display beliebiger Größe, sowie Mittel zur Darstellung einer Karte auf Grundlage der Positionsdaten und der Umgebungsinformationen auf dieser Ausgabeeinheit. Das heißt, es wird auf der Ausgabeeinheit die Karte mit dem darin markierten Fahrzeugabstellort, dem Zielort und einem optimalen Weg markiert, sodass der Benutzer anhand dieser Karte mit dem eingezeichneten Weg leicht vom Fahrzeugabstellort zum Zielort gelangen kann.

Bei kleineren Displays bietet es sich auch an, die Karte immer nur ausschnittsweise darzustellen, das heißt, zunächst nur den Fahrzeugabstellort mit einem Weg in Richtung Zielort. Der Benutzer kann dann, beispielsweise über die Softkey-Tasten, den Ausschnittsbereich in Richtung des Weges nach Bedarf verschieben, bis er an den Zielort gelangt.

Ebenso bietet es sich an, als Anzeigeeinrichtung eine ausrollbare oder auffaltbare, größere Displayfolie zu verwenden, sodass dem Nutzer eine vollständige Umgebungskarte mit dem eingezeichneten Weg in angemessener Auflösung zur Verfügung steht.

Weiterhin können vom Navigationshilfegerät zusätzliche akustische Informationen an den Nutzer ausgegeben werden. Selbstverständlich ist es alternativ auch möglich, die gesamten Informationen nur akustisch, z.B. als Sprachanweisungen, auszugeben.

Bei einem besonders bevorzugten Ausführungsbeispiel wird als Navigationshilfegerät einfach ein Mobilfunkgerät, ein PDA (Organizer) o. ä. genutzt. Derartige in der Hand haltbare elektronische Geräte weisen in der Regel bereits geeignete Schnittstellen sowie ein Display und eine Tastatur auf, so-dass lediglich eine weitere Zusatzfunktion zur erfindungsgemäßen Nutzung des Geräts implementiert werden muss. Das Implementieren einer solchen Funktion kann einfach mittels geeigneter Software erfolgen. Selbstverständlich ist es auch möglich, ein größeres portables Gerät wie einen Laptop oder dergleichen als Navigationshilfegerät zu nutzen. Jedoch ist die Handhabbarkeit solcher größeren Geräte etwas umständlicher als bei Kleinstgeräten wie Mobilfunkgeräten oder PDA's.

Die Erfindung wird im Folgenden unter Hinweis auf die beigefügten Zeichnungen anhand von Ausführungsbeispielen näher erläutert. Die dort dargestellten Merkmale und die bereits oben beschriebenen Merkmale können nicht nur in den genannten Kombinationen, sondern auch einzeln oder in anderen Kombinationen erfindungswesentlich sein. Es wird an dieser Stelle ausdrücklich darauf hingewiesen, dass auch Merkmale, die nur im Zusammenhang mit dem Navigationsverfahren genannt werden, ebenso bezüglich der Navigationseinrichtung und des Navigationshilfegeräts zur Durchführung des Navigationsverfahrens erfindungswesentlich sein können und umgekehrt. Es stellen dar:
Figur 1 eine schematische Darstellung des erfindungsgemäßen Navigationsverfahrens gemäß einem ersten Ausführungsbeispiel;
Figur 2 eine schematische Darstellung des erfindungsgemäßen Navigationsverfahrens gemäß einem zweiten Ausführungsbeispiel;
Figur 3 eine schematische Darstellung des erfindungsgemäßen Navigationsverfahrens gemäß einem dritten Ausführungsbeispiel.

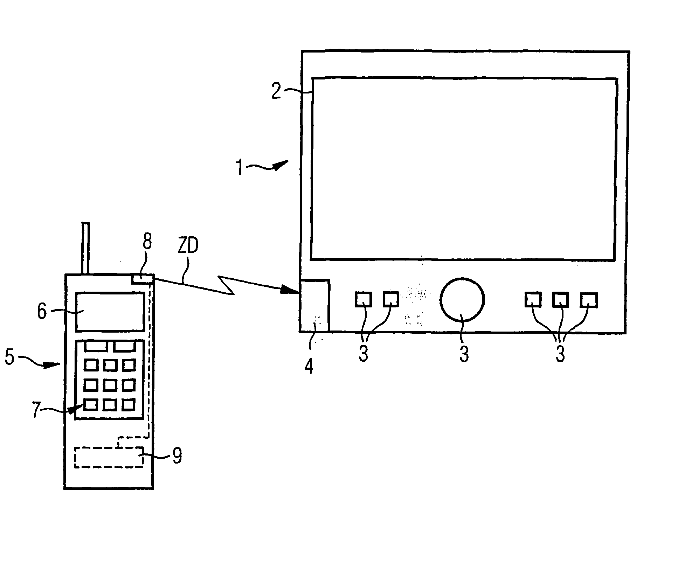

Bei dem ersten Ausführungsbeispiel gemäß Figur 1 wird von einer fahrzeuggebundenen Navigationseinrichtung 1, welche das übliche Display 2 sowie diverse Bedienelemente aufweist, ein kompletter Datensatz mit den Positionsdaten PD des Fahrzeugabstellorts und des Zielorts, den Umgebungsinformationen UI um den Fahrzeugabstellort, den Zielort und einen dazwischenliegenden Weg sowie die Wegdaten WD über den von der Navigationseinrichtung ermittelten optimalen Weg an das portable, fahrzeugunabhängige Navigationshilfegerät 5 übertragen.

Das heißt, es wird hier zur Wahl des optimalen Wegs der sogenannte "Routefinder" in der Navigationseinrichtung des Fahrzeugs genutzt. Es wird so folglich eine komplette Karte übermittelt, in welcher der Fahrzeugabstellort, der Zielort und der optimale Weg eingezeichnet sind.

Das Navigationshilfegerät 5 zeigt diese Karte dann auf einem Display 6 für den Benutzer an und gibt ggf. zusätzliche Sprachinformationen über einen Lautsprecher 7 aus, sodass der Benutzer auch akustisch entlang des Weges geleitet werden kann.

Bei dem hier nur schematisch dargestellten Navigationshilfegerät 5 kann es sich beispielsweise um ein Mobilfunkgerät oder einen PDA handeln. Derartige Geräte weisen in der Regel ohnehin ein Display und einen Lautsprecher für eine geeignete Ausgabe der Informationen auf. Außerdem besitzen solche Geräte auch in der Regel bereits eine geeignete Schnittstelle zur Kommunikation mit anderen Geräten. Im vorliegenden Fall handelt es sich um ein Bluetooth-Modul 8. Dementsprechend ist auch die Navigationseinrichtung 1 im Fahrzeug mit einem Bluetooth-Modul 3 ausgestattet, sodass über diesen kurzreichweitigen Funkstandard die benötigten Daten übermittelt werden.

Eine zweite Alternative ist in Figur 2 dargestellt. Im Gegensatz zu dem Ausführungsbeispiel gemäß Figur 1 werden hier nur die Positionsdaten PD von der fahrzeuggebundenen Navigationseinrichtung 1 an das portable, fahrzeugunabhängige Navigationshilfegerät 5 übermittelt. Auch hier erfolgt die Übermittlung über die Bluetooth-Module 3, 8. In einem Speicher 9 im Navigationshilfegerät 5 sind jedoch bereits verschiedene "Kartenausschnitte" oder eine Gesamtkarte für bestimmte Gebiete, beispielsweise Deutschland oder Europa, und/oder z. B. verschiedene Stadtpläne gespeichert. Anhand der übermittelten Positionsdaten PD des Fahrzeugabstellorts und des Zielorts wird dann die geeignete Karte herausgesucht bzw. ein geeigneter Kartenausschnitt gewählt. Außerdem befindet sich bei diesem Ausführungsbeispiel auch der "Routefinder" im Navigationshilfegerät 5. Das heißt, das Navigationshilfegerät 5 sucht selbst den optimalen Weg zwischen dem Fahrzeugabstellort und dem Zielort. Der "Routefinder" ist hier als ein Routefinder-Modul 10 dargestellt. Auch bei diesem Ausführungsbeispiel kann es sich bei dem Navigationshilfegerät 5 um ein Mobilfunkgerät oder ein PDA handeln, da diese Geräte ohnehin Speicherplatz aufweisen und entsprechende Routefinder-Module sich ebenfalls leicht als Software implementieren lassen.

Anstelle der Übertragung mittels Bluetooth ist es bei den genannten Ausführungsbeispielen alternativ auch möglich, eine andere Übertragungstechnik, beispielsweise mittels Infrarotoder Ultraschallmodulen, zu verwenden.

Ebenso ist eine direkte Steckverbindung als Schnittstelle einsetzbar. Bei Verwendung eines Mobilfunkgerätes als Navigationshilfegerät bietet es sich zudem an, die Schnittstelle einer Freisprecheinrichtung mitzuverwenden, sodass auf weitere zusätzliche Schnittstellen im Prinzip verzichtet werden kann.

Die Übertragung der Daten über diese Schnittstelle kann im Übrigen - bei einer sehr komfortablen Ausführungsform -automatisch bei Abstellen des Fahrzeuges, beispielsweise beim Ausschalten der Zündung oder beim Abziehen des Zündschlüssels geschehen. Das heißt, in einem solchen Fall wird beispielsweise in die Navigationseinrichtung 1 des Fahrzeugs beim Start nur der Zielort angegeben. Die Navigationseinrichtung leitet den Fahrer dann zu einem nächstgelegenen Parkplatz bzw. der Fahrer stellt selbsttätig sein Fahrzeug auf einem geeigneten Parkplatz in der Nähe des angezeigten Zielorts ab. Bei Ausschalten der Zündung wird dann der Restweg zwischen dem automatisch ermittelten Fahrzeugstandort, welcher dem Fahrzeugabstellort entspricht, und dem Zielort gemeinsam mit dem passenden Kartenausschnitt an das Navigationshilfegerät 5 übermittelt und dort auf dem Display 6 für den Benutzer dargestellt.

Bei dem dritten Ausführungsbeispiel gemäß Figur 3 weist die Navigationseinrichtung 1 im Fahrzeug anstelle des Bluetooth-Moduls 3 eine Datenträgerschreibeinrichtung 4 auf. Mit dieser Datenträgerschreibeinrichtung 4 werden die Positionsdaten auf einem Datenträger 12, beispielsweise eine SIM-Card oder einen CompactFlash- oder MultiMediaCard-Datenträger geschrieben.

Im vorliegenden Ausführungsbeispiel handelt es sich hierbei um einen Datenträger 12, auf dem bereits die Daten für eine Karte des entsprechenden Bereichs enthalten sind. Das heißt, es existiert beispielsweise eine ganze Bibliothek von Datenträgern, wobei jeder Datenträger einen bestimmten Kartenbereich abdeckt. Beispielsweise enthält ein Datenträger einen Stadtplan vom Großraum München, ein weiterer Datenträger einen Stadtplan vom Großraum Hamburg, ein Datenträger eine Karte von Norddeutschland und ein Datenträger eine Karte von Süddeutschland usw. Der passende Datenträger wird jeweils von der Navigationseinrichtung angefordert und vom Benutzer eingelegt.

Dieser Datenträger 12 wird dann von einem Navigationshilfegerät 5 mit einer geeigneten Datenträgerleseeinrichtung 11 ausgelesen, wobei im vorliegenden Ausführungsbeispiel vom Navigationshilfegerät 5 anhand der Positionsdaten sofort ein geeigneter Kartenausschnitt selektiert wird und dann nur die zu den Positionsdaten des Fahrzeugabstellorts und des Zielorts passende Umgebungsinformationen UI gelesen werden. Durch die Beschränkung auf die wirklich benötigten Daten kann die Lesegeschwindigkeit erhöht werden. In diesem Fall befindet sich ebenfalls im Navigationshilfegerät 5 ein Routefinder-Modul 10. Das heißt, auch bei diesem Ausführungsbeispiel wird anhand der Positionsdaten und der Umgebungsinformationen vom Navigationshilfegerät 5 selbst der optimale Weg gewählt.

Bei den Positionsdaten kann es sich im Prinzip um Adressen, mit Postleitzahl, Ort, Straße und Hausnummer handeln. Es kann sich jedoch auch um Koordinaten eines normierten Koordinatensystems handeln, mit dem sowohl das Navigationssystem als auch das Navigationshilfegerät 5 arbeitet. Vorzugsweise handelt es sich unabhängig von den genauen Daten jedoch um systemübergreifende Datenformate, sodass eine möglichst große Kompatibilität gewährleistet ist. Bei der Übergabe von Adressen kann beispielsweise das vCard- oder das iCard-Format verwendet werden.

## Patentansprüche

1. Navigationsverfahren, bei dem ein Fahrzeug unter Nutzung eines Navigationssystems mit einer fahrzeuggebundenen Navigationseinrichtung (1) zu einem von einem Zielort beabstandeten Fahrzeugabstellort bewegt wird, **dadurch gekennzeichnet, dass** zumindest Positionsdaten (PD) des Fahrzeugabstellorts und des Zielorts vom Navigationssystem an ein fahrzeugunabhängiges, portables Navigationshilfegerät (5) übermittelt werden, welches einen Weg zwischen dem Fahrzeugabstellort und dem Zielort ermittelt und mittels einer Ausgabeeinrichtung (6, 7) an einen Benutzer Informationen über diesen Weg ausgibt.

2. Navigationsverfahren nach Anspruch 1, **dadurch gekennzeichnet, dass** vom Navigationssystem an das Navigationshilfegerät (5) Umgebungsinformationen (UI) für einen Umgebungsbereich um den Fahrzeugabstellort, den Zielort und einen dazwischenliegenden Weg übermittelt werden.

3. Navigationsverfahren nach Anspruch 1, **dadurch gekennzeichnet, dass** im Navigationshilfegerät (5) Umgebungsinformationen für Umgebungen verschiedener Orte in einem Speicher (9) hinterlegt sind und anhand der vom Navigationssystem erhaltenen Positionsdaten (PD) des Fahrzeugabstellorts und des Zielorts das Navigationshilfegerät (5) einen Umgebungsbereich um den Fahrzeugabstellort, um den Zielort und einen dazwischenliegenden Weg auswählt.

4. Navigationsverfahren nach einem der Ansprüche 1 bis 3, **dadurch gekennzeichnet, dass** die Positionsdaten (PD) und/oder Umgebungsinformationen (UI) von der fahrzeuggebundenen Navigationseinrichtung (1) über eine Schnittstelle (3, 8) an das Navigationshilfegerät (5) übermittelt werden.

5. Navigationsverfahren nach Anspruch 4, **dadurch gekennzeichnet, dass** die Schnittstelle (3, 8) eine drahtlose Schnittstelle (3, 8) ist.

6. Navigationsverfahren nach einem der Ansprüche 1 bis 3, **dadurch gekennzeichnet, dass** die Positionsdaten und/oder die Umgebungsinformationen und/oder die Wegdaten von der fahrzeuggebundenen Navigationseinrichtung auf einen Datenträger geschrieben werden und von dem Navigationshilfegerät vom Datenträger gelesen werden.

7. Navigationsverfahren nach Anspruch 6, **dadurch gekennzeichnet, dass** die Positionsdaten (PD) von der fahrzeuggebundenen Navigationseinrichtung (5) auf einen Datenträger (12) geschrieben werden, auf dem Umgebungsinformationen (UI) innerhalb eines bestimmten Bereichs um den Fahrzeugabstellort gespeichert sind, und die Positionsdaten (PD) und Umgebungsinformationen (UI) von dem Navigationshilfegerät (5) vom Datenträger (12) gelesen werden.

8. Navigationsverfahren nach einem der Ansprüche 1 bis 3, **dadurch gekennzeichnet, dass** die Positionsdaten und/oder Umgebungsinformationen von einer Datenübermittlungseinrichtung des Navigationssystems an das Navigationshilfegerät übermittelt werden.

9. Navigationseinrichtung (1) für ein Fahrzeug zur Durchführung eines Verfahrens nach einem der Ansprüche 1 bis 8, mit Mitteln zur Ermittlung der Positionsdaten (PD) eines gewählten Fahrzeugabstellorts und eines gewählten Zielorts und/oder zugehöriger Umgebungsinformationen (UI) dieser Orte und eines Weges zwischen diesen Orten, und
mit einer Schnittstelle (3) zur Übermittlung der Positionsdaten (PD) und/oder der Umgebungsinformationen (UI) an ein portables Navigationshilfegerät (5) und/oder einer Datenträgerschreibeinrichtung (4) zur Speicherung der Positionsdaten (PD) und/oder der Umgebungsinformationen (UI) auf einem Datenträger (12), wobei das Navigationshilfsgerät (5) Mittel zur Bestimmung des Weges zwischen dem Fahrzeugabstellort und dem Zielort umfasst.

10. Portables Navigationshilfegerät (5) zur Durchführung eines Verfahrens nach einem der Ansprüche 1 bis 8, mit Mitteln zur Bestimmung des Weges zwischen dem Fahrzeugabstellort und dem Zielort, mit einer Schnittstelle (8) und/oder einer Datenträgerleseeinrichtung (11) und mit einer Ausgabeeinheit (6, 7) und mit Mitteln zum Empfang von Daten betreffend einen Fahrzeugabstellort und einen Zielort von einem Navigationssystem mittels der Schnittstelle (8) und/oder zum Erfassen solcher Daten von einem Datenträger (12) und zur Ausgabe von Informationen über einen Weg zwischen dem Fahrzeugabstellort und dem zielort mittels der Ausgabeeinheit (6, 7) an einen Benutzer.

11. Navigationshilfegerät nach Anspruch 10, **dadurch gekennzeichnet, dass** die Ausgabeeinheit (6, 7) eine Anzeigeeinrichtung (6) umfasst und das Navigationshilfegerät (5) Mittel zur Darstellung einer Karte auf Grundlage der Positionsdaten (PD) und der Umgebungsinformationen (UI) auf der Ausgabeeinheit (6) aufweist.

12. Navigationshilfegerät nach Anspruch 10 oder 11, **dadurch gekennzeichnet, dass** das Navigationshilfegerät ein Mobilfunkgerät und/oder PDA umfasst.

## Claims

1. A navigation method in which a vehicle is guided to a vehicle parking location at a distance from a destination by means of a navigation system having an on-board navigation device (1), **characterized in that** at least position data (PD) of the vehicle parking location and of the destination is transmitted by the navigation system to a vehicle-independent, portable auxiliary navigation unit (5) which determines a route between the vehicle parking location and the destination and outputs to a user information relating to said route by means of an output device (6, 7).

2. The navigation method as claimed in claim 1, **characterized in that** vicinity information (UI) for the area surrounding the vehicle parking location, the destination and a route between the two is transmitted by the navigation system to the auxiliary navigation unit (5).

3. The navigation method as claimed in claim 1, **characterized in that** vicinity information for the surroundings of various locations is already stored in a memory (9) in the auxiliary navigation unit (5), and on the basis of the position data (PD) of the vehicle parking location and of the destination obtained from the navigation system, the auxiliary navigation unit (5) selects a vicinity around the vehicle parking location, around the destination and a route between the two.

4. The navigation method as claimed in one of claims 1 to 3, **characterized in that** the position data (PD) and/or vicinity information (UI) is transmitted by the on-board navigation device (1) via an interface (3, 8) to the auxiliary navigation unit (5).

5. The navigation method as claimed in claim 4, **characterized in that** the interface (3, 8) is a wireless interface (3, 8).

6. The navigation method as claimed in one of claims 1 to 3, **characterized in that** the position data and/or the vicinity information and/or the route data is written by the on-board navigation device onto a data carrier and is read by the auxiliary navigation unit from the data carrier.

7. The navigation method as claimed in claim 6, **characterized in that** the position data (PD) is written by the on-board navigation device (1) onto a data carrier (12) on which vicinity information (UI) within a given range of the vehicle parking location is stored, and the position data (PD) and vicinity information (UI) are read from the data carrier (12) by the auxiliary navigation unit (5).

8. The navigation method as claimed in one of claims 1 to 3, **characterized in that** the position data and/or vicinity information is transmitted by a data communication device of the navigation system to the auxiliary navigation unit.

9. A navigation device (1) for a vehicle for carrying out a method as claimed in one of claims 1 to 8, having means for determining the position data (PD) of a selected vehicle parking location and of a selected destination and/or associated vicinity information (UI) for said locations and of a route between said locations, and having an interface (3) for the transmission of the position data (PD) and/or the vicinity information (UI) to a portable auxiliary navigation unit (5) and/or a data carrier writing device (4) for storing the position data (PD) and/or the vicinity information (UI) on a data carrier (12), wherein the auxiliary navigation unit (5) comprises means for determining the route between the vehicle parking location and the destination.

10. A portable auxiliary navigation unit (5) for carrying out a method as claimed in one of claims 1 to 8, having means for determining the route between the vehicle parking location and the destination, having an interface (8) and/or a data carrier reading device (11) and having an output unit (6, 7), and having means for receiving data relating to a vehicle parking location and a destination from a navigation system via the interface (8) and/or for acquiring such data from a data carrier (12) and for outputting information to a user about a route between the vehicle parking location and the destination by means of the output unit (6, 7).

11. An auxiliary navigation unit as claimed in claim 10, **characterized in that** the display unit (6, 7) comprises a display device (6), and the auxiliary navigation unit (5) has means for representing a map on the output unit (6) on the basis of the position data (PD) and the vicinity information (UI).

12. An auxiliary navigation unit as claimed in claim 10 or 11, **characterized in that** the auxiliary navigation unit comprises a mobile communication device and/or PDA.

## Revendications

1. Procédé de navigation, dans lequel un véhicule est déplacé vers un lieu de stationnement de véhicules espacé d'un lieu de destination en utilisant un système de navigation avec un dispositif de navigation (1) lié au véhicule, **caractérisé en ce qu'**au moins des données de position (PD) du lieu de stationnement du véhicule et du lieu de destination sont transmises du système de navigation à un appareil d'aide à la navigation (5) indépendant du véhicule et portable, lequel détermine un chemin entre le lieu de stationnement du véhicule et le lieu de destination et envoie des informations sur ce chemin à un utilisateur au moyen d'un appareil de sortie (6, 7).

2. Procédé de navigation selon la revendication 1, **caractérisé en ce que** des informations sur l'environnement (UI) pour un secteur d'environnement autour du lieu du stationnement du véhicule, du lieu de destination et d'un chemin intermédiaire sont transmises du système de navigation à l'appareil d'aide à la navigation (5).

3. Procédé de navigation selon la revendication 1, **caractérisé en ce que** des informations sur l'environnement pour des environnements de différents endroits sont déposées dans une mémoire (9) dans l'appareil d'aide à la navigation et, à l'aide de données de position (PD) obtenues par le système de navigation, du lieu de stationnement du véhicule et du lieu de destination, l'appareil d'aide à la navigation (5) sélectionne une zone d'environnement autour du lieu de stationnement du véhicule, du lieu de destination et d'un chemin intermédiaire.

4. Procédé de navigation selon l'une quelconque des revendications 1 à 3, **caractérisé en ce que** les données de position (PD) et/ou les informations sur l'environnement (UI) sont transmises du dispositif de navigation (1) lié au véhicule à l'appareil d'aide à la navigation (5) au moyen d'une interface (3, 8).

5. Procédé de navigation selon la revendication 4, **caractérisé en ce que** l'interface (3, 8) est une interface sans fil (3, 8).

6. Procédé de navigation selon l'une quelconque des revendications 1 à 3, **caractérisé en ce que** les données de position et/ou les informations sur l'environnement et/ou les données du chemin sont inscrites par le dispositif de navigation lié au véhicule sur un support de données et sont lues par l'appareil d'aide à la navigation sur le support de données.

7. Procédé de navigation selon la revendication 6, **caractérisé en ce que** les données de position (PD) sont écrites par le dispositif de navigation (5) lié au véhicule sur un support de données (12), sur lequel des informations sur l'environnement (UI) à l'intérieur d'une zone déterminée autour du lieu de stationnement du véhicule sont mémorisées, et les données de position (PD) et les informations sur l'environnement (UI) sont lues par l'appareil d'aide à la navigation (5) sur le support de données (12).

8. Procédé de navigation selon l'une quelconque des revendications 1 à 3, **caractérisé en ce que** les données de position et/ou les informations sur l'environnement sont transmises par un dispositif de transmission de données du système de navigation à l'appareil d'aide à la navigation.

9. Dispositif de navigation (1) pour un véhicule pour l'application d'un procédé selon l'une quelconque des revendications 1 à 8, comprenant des moyens pour la détermination des données de position (PD) d'un lieu de stationnement de véhicule choisi et d'un lieu de destination choisi et/ou d'informations spécifiques à l'environnement (UI) de ces lieux et d'un chemin entre ces lieux, et comprenant une interface (3) pour la transmission des données de position (PD) et/ou des informations sur l'environnement (UI) à un appareil portable d'aide à la navigation (5) et/ou un appareil d'écriture de support de données (4) pour la mémorisation des données de position (PD) et/ou des informations sur l'environnement (UI) sur un support de données (12), l'appareil d'aide à la navigation (5) comprenant des moyens pour la détermination du chemin entre le lieu de stationnement du véhicule et le lieu de destination.

10. Appareil portable d'aide à la navigation (5) pour l'application d'un procédé selon l'une quelconque des revendications 1 à 8, comprenant des moyens pour la détermination du chemin entre le lieu de stationnement du véhicule et le lieu de destination, une interface (8) et/ou un dispositif de lecture de support de données (11) et une unité de sortie (6, 7) et des moyens pour la réception de données concernant un lieu de stationnement du véhicule et un lieu de destination provenant d'un système de navigation au moyen de l'interface (8) et/ou pour la saisie de ces données provenant d'un support de données (12) et pour la sortie d'informations sur un chemin entre le lieu de stationnement du véhicule et le lieu de destination au moyen de l'unité de sortie (6, 7) à un utilisateur.

11. Appareil d'aide à la navigation selon la revendication 10, **caractérisé en ce que** l'unité de sortie (6, 7) comprend un dispositif d'affichage (6) et l'appareil d'aide à la navigation (5) présente des moyens pour la représentation d'une carte sur la base des données de position (PD) et des informations sur l'environnement (UI) sur l'unité de sortie (6).

12. Appareil d'aide à la navigation selon la revendication 10 ou 11, **caractérisé en ce que** l'appareil d'aide à la navigation comprend un appareil de téléphonie mobile et/ou un PDA.
